Europäisches Patentamt

European Patent Office

Office européen des brevets

(19)

(11) Numéro de publication : **0 338 873 B1**

(12) # FASCICULE DE BREVET EUROPEEN

(45) Date de publication du fascicule du brevet :
**25.11.92 Bulletin 92/48**

(51) Int. Cl.$^5$ : **B29D 29/10, B26D 3/06**

(21) Numéro de dépôt : **89400771.5**

(22) Date de dépôt : **20.03.89**

(54) **Courroie doublement striée et son procédé de fabrication.**

(30) Priorité : **21.04.88 FR 8805278**

(43) Date de publication de la demande :
**25.10.89 Bulletin 89/43**

(45) Mention de la délivrance du brevet :
**25.11.92 Bulletin 92/48**

(84) Etats contractants désignés :
**BE DE ES GB IT LU NL SE**

(56) Documents cités :
**EP-A- 0 153 049**
**EP-A- 0 214 742**
**DE-A- 3 033 015**
**DE-A- 3 524 583**
**US-A- 3 839 116**
**US-A- 4 253 836**

(56) Documents cités :
**PATENT ABSTRACTS OF JAPAN, vol. 11, No.
356 (M-644)[2803], 20 Novembre 1987, page
132 M 644; & JP-A-62-135 353(MITSUBOSHI
BELTING LTD) 18-06-1987**

(73) Titulaire : **HUTCHINSON**
**2 rue Balzac**
**F-75008 Paris (FR)**

(72) Inventeur : **Berthelier, Marc**
**Bono - Athee S/Cher**
**F-37270 Montlouis S/Loire (FR)**
Inventeur : **Fribault, Alain**
**5, rue Messager**
**F-37300 Joue-les-Tours (FR)**

(74) Mandataire : **Brycman, Jean et al**
**CABINET ORES 6, Avenue de Messine**
**F-75008 Paris (FR)**

## Description

L'invention a pour objet une courroie doublement striée et son procédé de fabrication.

On connaît déjà, dans de nombreuses réalisations, des courroies striées qui, dans la définition donnée par exemple par la norme française AFNOR R 15 506, sont des courroies sans fin comportant une armature destinée à résister à la traction et dont la surface de contact avec une poulie présente des nervures longitudinales à un profil donné. De telles courroies, relativement plus souples que les courroies trapézoïdales de transmission de puissance usuelles, peuvent s'enrouler sur des poulies de faible diamètre et, compte-tenu du fait qu'elles peuvent être utilisées pour des vitesses de rotation élevées, elles trouvent une application particulièrement intéressantes dans le domaine de l'automobile sans, bien entendu, que cette indication ait quelque caractère limitatif que ce soit.

On connaît également deux grands types de procédés pour la fabrication de telles courroies, un premier que l'on peut considérer comme étant "à moulage", c'est-à-dire dans lequel les nervures sont définies par des pièces de forme à partir d'une ébauche comportant les couches d'élastomère et de câblés et le second étant à "usinage", c'est-à-dire dans lequel une ébauche vulcanisée est soit meulée pour définir les nervures, soit encore, comme proposé dans le brevet US-A-4 464 148, taillée à l'aide d'une fraise de coupe.

Quel que soit la mode de fabrication de la courroie, celle-ci est mise en oeuvre dans une installation comportant une poulie menante et des poulies menées dont une au moins est parfois entraînées par le dos de la courroie. Etant donné qu'un dos plat de permet pas d'assurer un entraînement satisfaisant, on a déjà proposé des courroies doublement striées, c'est-à-dire présentant des nervures longitudinales sur l'une et l'autre de ses surfaces intérieure et de dos (voir par exemple US-A-4 253 836 ou US-A-3 839 116 qui décrit, notamment, un procédé suivant lequel une ébauche constituée des couches de gomme, tissus et câblés nécessaires est conformée dans un moule de vulcanisation pour former sur l'une de ses faces le premier profil de nervrures souhaité). De telles courroies sont toutefois peu répandues, en raison de leur coût élevé, lequel est dû principalement aux difficultés de réalisation des formes géométriques précises exigées pour leur fonctionnement satisfaisant.

C'est, pas conséquent, un but général de l'invention de fournir une courroie doublement striée qui, tout en présentant les caractéristiques souhaitées quant à la géométrie des nervures de l'une et l'autre de ses surfaces et de la correspondance entre elles desdites nervures, soit d'un coût inférieur à celui des courroies connues.

C'est, aussi, un but de l'invention de fournir un procédé de fabrication de telles courroies qui en permette la réalisation industrielle dans des conditions économiques satisfaisantes.

Le problème est résolu par un procédé de fabrication d'une courroie striée sur sa surface interne et sa surface de dos suivant des nervures longitudinales propres à coopérer avec les gorges des poulies que la courroie est destinée à équiper, à partir d'une ébauche constituée des couches de gomme, tissus et câblés nécessaires et qui est conformée dans un moule de vulcanisation pour former sur l'une de ses faces au moins le premier profil de nervures souhaité caractérisé, selon l'invention, en ce que pour l'obtention du second profil de nervures on prévoit de ménager sur l'ébauche, au cours du processus de fabrication, au moins une face de référence permettant le positionnement précis du profil de nervures formé en second par rapport au profil de nervures formé en premier.

Le procédé selon l'invention peut être exécuté suivant différents modes.

Dans un premier cas, le procédé est caractérisé en ce que lors de la conformation de l'ébauche dans un premier moule pour réaliser le profil de nervures formé en premier, la partie destinée à être façonnée au profil formé en second n'est pas vulcanisée et en ce que cette opération est suivie, après définition d'une face de référence de l'ébauche par moulage ou par découpe, d'un retournement de l'ébauche qui est alors conformée au profil formé en second par un processus analogue à celui d'obtention du profil formé en premier.

L'invention est également caractérisée en ce qu'après conformation de l'ébauche suivant le profil de nervures formé en premier, l'ébauche façonnée et vulcanisée est retournée, et en ce qu'après avoir ménagé une face de référence on façonne alors le profil de nervures formé en second à partir de ladite face de référence par usinage, avantageusement meulage ou taillage.

L'invention propose également un procédé caractérisé en ce qu'après avoir totalement vulcanisé l'ébauche dans un moule pour l'obtention d'une forme tubulaire lisse, et après refroidissement, celle-ci est mise en place sur une machine d'usinage par meulage ou taillage pour la réalisation du premier profil de nervures longitudinales sur sa première surface, puis après création d'une face de référence, usinage par meulage ou taillage du second profil de nervures après retournement de la forme vulcanisée, usinée sur sa première surface.

Comme dans le procédé décrit précédemment, les profils de nervures sur l'une et l'autre surfaces de la courroie peuvent être les mêmes ou différents.

D'autres caractéristiques et avantages de l'invention apparaîtront de la description qui suit, faite à titre d'exemple et en référence au dessin annexé dans lequel:

- les figures 1 et 2 sont des vues schématiques, en coupe transversale, de courroies doublement striées;
- la figure 3 est un schéma illustrant l'utilisation d'une courroie doublement striée;
- la figure 4 est un schéma illustrant un premier mode d'exécution d'un procédé de fabrication d'une courroie selon l'invention;
- la figure 5 est une vue analogue à celle de la figure 4 mais pour un autre mode d'exécution;
- la figure 6 est une vue analogue aux deux précédentes mais pour encore un autre mode d'exécution.

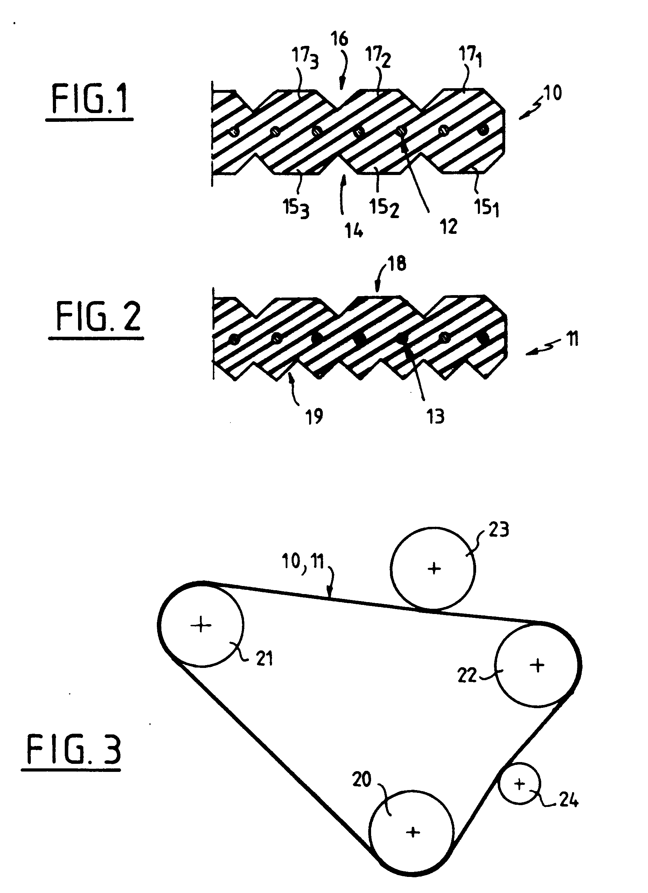

On se réfère d'abord aux figures 1 et 2 qui montrent schématiquement, chacune, une courroie en matériau élastomère doublement striée 10 et 11, respectivement, comportant, le cas échéant, des tissus en un ou plusieurs pli(s) et dans lesquelles l'armature destinée à résister à la traction et qui définit la zone primitive est désignée par la référence 12 ou 13, respectivement, ladite armature étant réalisée en câblés de fibres polyester ou de fibres de polyamides aromatiques ou en matériaux analogues. La courroie 10 présente sur sa surface 14 des nervures $15_1$, $15_2$, $15_3$, etc..., à section droite tronquée et qui sont du type de celles connues dans la norme française mentionnée ci-dessus sous le nom de profil "K" mais qui peuvent, bien entendu, être à section droite triangulaire ou tronquée comme défini par les références H, J, L ou M de la norme précitée. Sur son autre surface 16 ou dos, la courroie 10 présente également des nervures $17_1$, $17_2$, $17_3$, etc., au même profil et au même pas que celui de la surface interne, les nervures 15 et 17 étant à symétrie de miroir par rapport au plan moyen de la courroie, qui est ici celui de l'armature 12.

Dans la réalisation illustrée sur la figure 2, la surface externe ou dos 18 de la courroie 11 est de structure identique à celle décrite ci-dessus pour la courroie 10 mais sa surface interne est munie de nervures 19 à section droite sensiblement triangulaire, du type de celles définies par la norme déjà citée sous le nom de profil "J" mais qui peuvent, bien entendu, être à section droite triangulaire ou tronquée comme défini par les références H, K, L ou M de la norme précitée. Dans cette réalisation, en outre, le pas des nervures 19 de la surface interne est sensiblement moitié de celui des nervures de la surface externe ou dos 18.

Une courroie, comme 10 ou 11, trouve avantageusement application, par exemple, dans l'installation du compartiment moteur d'une automobile, figure 3, où une poulie menante 20 entraîne des poulies menées 21 et 22 avec lesquelles coopère la surface interne de la courroie et entraîne aussi une poulie 23 qui coopère avec le dos de la courroie, celle-ci étant maintenue sous tension appropriée à l'aide d'un tendeur 24 agissant lui aussi sur le dos de la courroie.

Quel que soit le montage d'application de la courroie le bon fonctionnement de celle-ci et des organes qui lui sont associés exige que les caractéristiques géométriques de l'ensemble soient définies avec précision et, en particulier, que les nervures de l'une et l'autre surfaces se correspondent avec exactitude. Pour qu'il en soit ainsi, l'invention propose un procédé de fabrication de la courroie selon lequel après obtention d'un premier profil sur l'une des surfaces opératoires de la courroie, c'est-à-dire l'une des surfaces de contact avec les gorges des poulies qu'elle est destinés à équiper, on définit une face de référence pour le positionnement précis du second profil sur l'autre surface de la courroie qui est alors réalisé par le même processus ou un processus différent de celui ayant permis d'obtenir le premier profil.

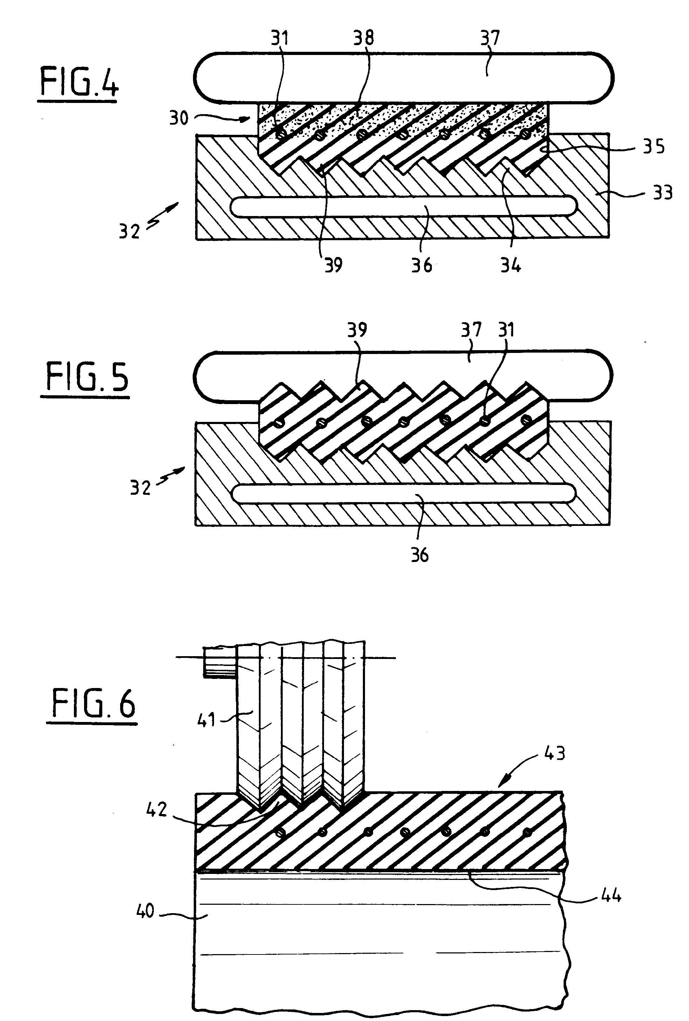

Dans un premier mode d'exécution faisant appel aux techniques de moulage uniquement, une ébauche 30, figure 4, est d'abord préparée de façon usuelle par enroulement sur un mandrin cylindrique de couches de gomme, de tissus et de câblés 31.

L'ébauche est ensuite transférée dans un dispositif de moulage, montré schématiquement en 32, et qui comprend une matrice métallique 33 conformée dans sa partie opératoire suivant des dents 34 destinées à réaliser le premier profil de nervures 39 de la courroie et également conformée suivant une paroi 35 destinée à fournir une face de référence, l'ensemble des dents et de ladite paroi étant usiné avec une grande précision, de l'ordre du centième de mm. La matrice 33, qui comprend des moyens de réglage de la température montrés schématiquement en 36 est associés à un organe 37 d'application de la pression, du type "air bag" propre à exercer pendant toute l'opération de vulcanisation une pressiion qui peut être de l'ordre de 20 bars. Par un réglage approprié de la durée de traitement, de la température de la matrice 33 et de la pression appliquée par le dispositif 37, on procède dans le moule 32 à une vulcanisation partielle de l'ébauche 30, en fait à une vulcanisation de la partie de la courroie présentant le premier profil de nervures 39 mais sans vulcanisation de la partie 38 du dos de la courroie, comme montré sur le dessin par la différence de hachures et de grisé.

A la fin de cette première opération de vulcanisation, l'ébauche 30 est refroidie de manière à éviter autant que possible les phénomènes de retrait. L'ébauche est alors retournée, c'est-à-dire amenée dans une condition où la partie non vulcanisée 38 est à l'intérieur de l'ébauche tandis que les nervures 39 du premier profil sont à l'extérieur, et ladite ébauche retournée est alors transférée soit dans le même moule 32 ayant servi à la formation du premier profil de nervures, si l'on souhaite que la courroie présente le même profil sur ses deux surfaces internes et de dos, soit dans un moule usiné suivant un profil différent si l'on souhaite obtenir une courroie du type de celle montrée sur la figure 2.

Dans l'un et l'autre cas, le second profil est réalisé au cours d'un processus de vulcanisation analogue à celui mis en oeuvre pour la formation du premier, le positionnement précis des deux profils de nervures l'un par rapport à l'autre étant obtenu à l'aide de la surface définie par la paroi de référence 35 de la matrice 33 du moule 32.

Un tel procédé trouve application quel que soit le type de caoutchouc mis en oeuvre, naturel ou synthétique.

Dans un second mode d'exécution du procédé selon l'invention, les nervures de l'une et l'autre surfaces opératoires de la courroie sont réalisées à la fois par moulage et usinage. Au cours d'une première étape de ce mode d'exécution, l'ébauche 30 constituée des couches de gomme, des tissus et des câblés 31 est soumise à un traitement de vulcanisation dans un moule 32, c'est-à-dire comportant une matrice usinée en correspondance d'un premier profil de nervures, mais l'opération de vulcanisation est ici conduite de manière à intéresser la totalité de l'ébauche, de sorte que, après vulcanisation, on obtient une forme tubulaire entièrement vulcanisée dont la surface interne présente les nervures longitudinales 39. Ladite forme tubulaire est alors retournée pour faire passer les nervures 39 de l'intérieur à l'extérieur puis est mise en place sur le tambour rotatif d'une machine d'usinage à meule ou fraise de taillage. Le positionnement précis du second profil, taillé ou meulé dans la forme tubulaire, est défini à l'aide de la face de référence obtenue lors du moulage de la phase précédente par la paroi 35 du moule 33 ou par une coupe de ladite forme tubulaire à une cote de référence qui peut être définie avec précision sur la machine d'usinage.

Dans un troisième mode d'exécution du procédé selon l'invention, l'ébauche 30 constituée des couches de gomme, des tissus et des câblés est d'abord soumise à un traitement de vulcanisation sans façonnage pour fournir un tube lisse sur ses surfaces externe et interne. Après refroidissement pour éviter les retraits, d'une part, et s'affranchir de l'influence de la température sur les câblés constitutifs de l'armature, notamment lorsque ceux-ci sont en fibres polyester, d'autre part, on transfère le tube lisse sur le mandrin rotatif 40, figure 6, d'une machine d'usinage par meulage ou par taillage à l'aide d'une fraise rotative 41. Après formation du premier profil à nervures 42 et définition d'une face de référence sur la machine d'usinage, la forme tubulaire 43 est retournée pour amener les nervures 42 à l'intérieur de ladite forme et la surface cylindrique lisse 44 à l'extérieur. Un second usinage, par meulage ou taillage, établi à partir de la face de référence permet alors d'obtenir la courroie doublement striée souhaitée.

Le procédé de fabrication par usinage est d'application particulièrement intéressante pour les élastomères de relativement grande dureté, comme les polychloroprènes, de préférence aux élastomères de plus faible dureté comme les caoutchoucs naturels ou analogues.

Quel que soit le mode d'exécution, le procédé selon l'invention est d'application particulièrement intéressante dans le cas des gommes à fibres, c'est-à-dire de matériaux élastomères chargés de fibres orientées dont la disposition peut être choisie symétriquement ou non de part et d'autre des câblés et des tissus assurant la raideur transversale de la courroie.

## Revendications

1. Procédé de fabrication d'une courroie striée sur sa surface interne et sa surface de dos suivant des nervures longitudinales (39...) propres à coopérer avec les gorges des poulies que la courroie est destinée à équiper, à partir d'une ébauche constituée des couches de gomme, tissus et câblés nécessaires et qui est conformée dans un moule de vulcanisation pour former sur l'une de ses faces au moins le premier profil de nervures souhaité, caractérisé en ce que, pour l'obtention du second profil de nervures, on prévoit de ménager sur l'ébauche, au cours du processus de fabrication, au moins une face de référence permettant le positionnement précis du profil de nervures formé en second par rapport au profil de nervures formé en premier.

2. Procédé selon la revendication 1, caractérisé en ce que, lors de la conformation de l'ébauche (30) dans un premier moule (32) pour réaliser le profil (39) de nervures formé en premier, la partie (38) destinée à être façonnée au profil formé en second n'est pas vulcanisée et en ce que cette opération est suivie, après définition d'une face de référence de l'ébauche par moulage ou par découpe, d'un retournement de l'ébauche qui est alors conformée au profil formé en second par un processus analogue à celui d'obtention du profil formé en premier.

3. Procédé selon la revendication 1, caractérisé en ce qu'après conformation de l'ébauche (30) suivant le profil de nervures formé en premier, l'ébauche façonnée et vulcanisée est retournée, et en ce qu'après avoir ménagé une face de référence on façonne alors le profil de nervures formé en second à partir de ladite face de référence par usinage, avantageusement meulage ou taillage.

4. Procédé selon la revendication 1, caractérisé en ce qu'après avoir totalement vulcanisé l'ébauche dans un moule pour l'obtention d'une forme tubulaire lisse, et après refroidissement, celle-ci est mise en place sur une machine d'usinage par meulage ou taillage pour la réalisation du premier profil de nervures longitudinales sur sa première surface puis, après création d'une face de référence, usinage par meulage ou taillage du second profil de nervures après retournement de la forme vulcanisée, usinée sur sa première surface.

**Patentansprüche**

1. Verfahren zur Herstellung eines Treibriemens, der auf seiner inneren Oberfläche und seiner rückseitigen Oberfläche gemäß Längsrippen (39...) gerillt ist, die dazu geeignet sind, mit den Rillen von Riemenscheiben zusammenzuarbeiten, welche der Treibriemen bestücken soll, ausgehend von einem Rohling, der von Gummischichten, Textilien und Kabeln, die notwendig sind, gebildet ist, und der in einer Vulkanisationsform zum Ausbilden wenigstens des ersten Profils von gewünschten Rippen auf der einen seiner Seiten geformt wird, dadurch **gekennzeichnet,** daß man zum Erhalten des zweiten Profils von Rippen vorsieht, auf dem Rohling im Verlauf des Herstellungsverfahrens wenigstens eine Bezugsfläche anzubringen, welche die präzise Positionierung des Profils der als zweite ausgebildeten Rippen mit Bezug auf das Profil der als erste ausgebildeten Rippen gestattet.

2. Verfahren nach Anspruch 1, dadurch **gekennzeichnet,** daß während der Bildung des Rohlings (30) in einer ersten Form (32) zum Realisieren des Profils (39) der zuerst gebildeten Rippen, der Teil (38), der dazu bestimmt ist, mit dem als zweites gebildeten Profil ausgebildet zu werden, nicht vulkanisiert wird, und daß diese Operation nach der Definition einer Bezugsfläche des Rohlings durch Formen oder durch Beschneiden von einem Umdrehen des Rohlings gefolgt wird, der dann mit dem als zweites gebildeten Profil durch ein Verfahren, das analog demjenigen des Erhaltens des zuerst gebildeten Profils ist, gebildet wird.

3. Verfahren nach Anspruch 1, dadurch **gekennzeichnet,** daß nach der Bildung des Rohlings (30) gemäß dem zuerst gebildeten Profil von Rippen, der bearbeitete und vulkanisierte Rohling umgedreht wird und daß man, nachdem eine Bezugsfläche angebracht worden ist, dann das als zweites gebildete Profil von Rippen ausgehend von der Bezugsfläche durch maschinelle Bearbeitung, vorteilhafterweise Schleifen oder Schneiden, ausbildet.

4. Verfahren nach Anspruch 1, dadurch **gekennzeichnet,** daß, nachdem man den Rohling in einer Form für das Erhalten einer glatten Röhrenform total vulkanisiert hat, und nach Kühlung, derselbe auf einer Maschine für die Bearbeitung durch Schleifen oder Schneiden angeordnet wird zur Realisierung des ersten Profils von Längsrippen auf seiner ersten Oberfläche, sodann nach Erzeugen einer Bezugsfläche maschinelle Ausführung des zweiten Profils von Rippen durch Schleifen oder Schneiden nach Umdrehen der vulkanisierten Gestalt, die auf ihrer ersten Oberfläche maschinell bearbeitet ist.

**Claims**

1. Method of manufacturing a belt ribbed on its internal surface and its back surface along longitudinal ribs (39 ...... ) adapted to cooperate with the grooves of the pulleys for which the belt is intended, from a blank consisting of the necessary layers of gum, fabrics and cables, and which is shaped in a vulcanization mould to form the first desired rib profile on at least one of its surfaces, characterized in that, to obtain the second rib profile, at least one reference face is created on the blank, during the manufacturing process, to allow the accurate positioning of the rib profile formed secondly with respect to the rib profile formed first.

2. Method as claimed in Claim 1, characterized in that, during the shaping of the blank (**30**) in a first mould (**32**) to make the first rib profile (**39**), the portion (**38**) intended to be shaped to the second profile is not vulcanized, and in that this operation is followed, after the definition of a reference face of the blank by moulding or by cutting, by turning over the blank, which is then shaped to match the second profile by a process similar to that used to obtain the first profile.

3. Method as claimed in Claim 1, characterized in that, after the shaping of the blank (**30**) to match the first rib profile, the shaped and vulcanized blank is turned over, and in that, after having created a reference face, the second rib profile is made from said reference face by machining, advantageously by grinding or cutting.

4. Method as claimed in Claim 1, characterized in that, after having completely vulcanized the blank in a mould to obtain a smooth tubular shape, and after cooling, this shape is placed in a grinding or cutting machine to make the first profile of longitudinal ribs on its first surface, and then, after creating a reference face, the second rib profile is machined by grinding or cutting after turning over the vulcanized shape, which is machined on its first surface.

## FIG.1

## FIG.2

## FIG.3

FIG.4

31  38  37

30

32

35

33

39  36  34

FIG.5

39  37  31

32

36

FIG.6

41

42

43

40

44

8